# EUROPÄISCHE PATENTANMELDUNG

(11) **EP 1 903 239 A2**
(43) Veröffentlichungstag der Anmeldung: **26.03.2008**
(21) Anmeldenummer: 07012235.3
(22) Anmeldetag: 22.06.2007
(51) Int. Cl.: F16D 48/06

(54) **Steuerung einer Reibungskupplung zwischen einem Verbrennungsmotor und einem Wechselgetriebe**

(30) Priorität: 20.09.2006 DE 102006044273
(71) Anmelder: Dr.Ing. h.c. F. Porsche Aktiengesellschaft, 70435 Stuttgart (DE)
(72) Erfinder: Kurrle, Frank, 74385 Pleidelsheim (DE); Treutner, Katja, 71277 Rutesheim (DE); Baur, Peter, 71297 Moensheim (DE)

(57) **Zusammenfassung**

Vorgestellt wird ein Verfahren zum Steuern einer Reibungskupplung (10) zwischen einem Verbrennungsmotor (12) und einem Wechselgetriebe (14). Das Verfahren zeichnet sich dadurch aus, dass die Reibungskopplung (10) so gesteuert wird, dass sie ein mittleres Kupplungsmoment (M_K_mittel) des Verbrennungsmotors (12) überträgt und periodisch auftretende Spitzenwerte (M_K_spitze) des Kupplungsmomentes nicht überträgt. Ferner wird ein Steuergerät (44) vorgestellt, dass zur Durchführung des Verfahrens programmiert ist.

## Beschreibung

Die Erfindung betrifft sowohl ein Verfahren als auch ein Steuergerät zum Steuern einer Reibungskupplung zwischen einem Verbrennungsmotor und einem Wechselgetriebe. Bei manuell zu schaltenden Wechselgetrieben werden Reibungskupplungen zur Trennung des Kraftflusses zwischen Verbrennungsmotor und Getriebe beim Anfahren und beim Gangwechsel verwendet. Neben Systemen, bei denen ein Fahrer den Kraftfluss über die Kupplung mit einem Kupplungspedal steuert und den Gangwechsel manuell vornimmt, sind auch Systeme bekannt, bei denen die Kupplung sowohl beim Anfahren als auch beim Gangwechsel automatisch gesteuert wird. Bekannte Beispiele sind sogenannte automatisierte Schaltgetriebe und Getriebe mit Doppelkupplungen wie Direktschaltgetriebe.

Die automatische Steuerung erfolgt durch elektromechanische, elektropneumatische oder elektrohydraulische Stellglieder, die eine stufenlose Variation des über die Kupplung übertragenen Drehmoments erlauben.

Ferner werden Reibungskupplungen bei sogenannten Vollautomatikgetrieben mit Planetenradsätzen und hydraulischem Drehmomentwandler zwischen dem Verbrennungsmotor und dem übrigen Getriebe eingesetzt, um den Wandler gegebenenfalls zu überbrücken. Dort dienen sie primär dazu, einen im hydraulischen Drehmomentwandler unter stationären Bedingungen auftretenden Schlupf zu verhindern. Diese Wandlerüberbrückungs-Kupplungen werden automatisch geschlossen, wenn ein Unterschied zwischen einer Drehzahl auf der Eingangsseite des Wandlers und einer Drehzahl auf der Ausgangsseite des Wandlers einen Schwellenwert unterschreitet.

Der Verbrennungsmotor stellt zusammen mit den übrigen Elementen des Triebstrangs, also zusammen mit Kupplung, Getrieben, Antriebswellen und sonstigen Wellen ein zu Drehschwingungen fähiges System dar. Drehschwingungen werden zum Beispiel bei geschlossener Kupplung durch Schwankungen der Winkelgeschwindigkeit der Kurbelwelle des Verbrennungsmotors angeregt, die im normalen Betrieb durch die diskontinuierliche, in Takte aufgeteilte Arbeitsweise des Verbrennungsmotors auftreten. Diese Drehschwingungen können im Getriebe zu einer Anregung von Getrieberasseln, also von rasselnden Getriebegeräuschen, durch mit Spiel eingebaute Bauteile führen. Durch die Drehschwingungen wechselt die Flanke, mit der das spielbehaftete Bauteil an anderen Bauteilen anliegt. Dieser beim Betrieb des Verbrennungsmotors unter Last auftretende Flankenwechsel ist für das störende Rasseln verantwortlich. Das Rasseln beeinträchtigt zwar weder die Funktion noch die Haltbarkeit des Getriebes, wird aber vom Fahrer als subjektiv störend empfunden.

Zur Abhilfe ist es bei Automatikgetrieben bekannt, die Wandlerüberbrückungskupplungen mit einem geregelten Schlupf zu betreiben. Als zu regelnde Größe dient ein Drehzahlunterschied zwischen der Eingangsseite und der Ausgangsseite der Kupplung, der eine Größenordnung von 50 bis 100 min⁻¹ besitzt. Dieser Dauer-Schlupf kostet zwar Energie, die in der Kupplung in Reibungswärme umgewandelt wird, der Energieverlust ist jedoch nicht so groß wie der Energieverlust in einem hydraulischen Drehmomentwandler, der ohne Wandlerüberbrückungskupplung betrieben wird. Festzuhalten ist jedoch, dass der Geräuschvorteil mit einem Energieverlust erkauft wird, der den Wirkungsgrad des Triebstrangs verringert. Ferner erfordert diese Schlupfregelung eine zeitlich hochauflösende und damit aufwändige Erfassung und Verarbeitung von Drehzahlen auf der Eingangsseite und der Ausgangsseite der Kupplung.

Vor diesem Hintergrund besteht die Aufgabe der Erfindung in der Angabe eines verbesserten Verfahrens und eines verbesserten Steuergeräts, mit dem sich das störende Geräusch jeweils eliminieren lässt und mit dem die genannten Nachteile eines verschlechterten Wirkungsgrades und einer aufwändigen Regelung zumindest verringert werden.

Diese Aufgabe wird bei einem Verfahren der eingangs genannten Art mit den kennzeichnenden Merkmalen des Anspruchs 1 und bei einem Steuergerät der eingangs genannten Art mit den kennzeichnenden Merkmalen des Anspruchs 9 gelöst. Die Erfindung zeichnet sich demnach dadurch aus, dass die Reibungskupplung so gesteuert wird, dass sie ein mittleres Kupplungsmoment des Verbrennungsmotors überträgt und ein Durchrutschen der Kupplung mit verminderter Kraftübertragung bei periodisch auftretenden Spitzenwerten des Kupplungsmomentes erlaubt. Dabei wird unter dem Kupplungsmoment das vom Verbrennungsmotor als Eingangsdrehmoment für die Kupplung bereitgestellte Drehmoment verstanden. Es entspricht dem vom Verbrennungsmotor erzeugten Drehmoment nach dem Abzug der zum Antrieb von Nebenaggregaten benötigten Drehmomente.

### Vorteile

Die Kupplung wird also so gesteuert, dass sie bei einem wellenförmigen Eingangsdrehmoment gerade dann kurzzeitig rutscht, wenn das Eingangsdrehmoment in einer positiven Halbwelle einen Schwellenwert übersteigt, der durch das eingestellte, maximal übertragbare Drehmoment der Kupplung definiert wird. Dadurch werden dem schwingfähigen System anregende Drehmoment-Impulse entzogen, was dämpfend auf die Schwingung wirkt. Außerdem wird das Trägheitsmoment des Verbrennungsmotors beim kurzzeitigen Durchrutschen der Kupplung vom Trägheitsmoment des übrigen Triebstrangs getrennt. Dadurch ändern sich auch die möglichen Eigenfrequenzen von Drehschwingungen, die vom Trägheitsmoment des betrachteten Systems abhängig sind. Auch dies wirkt einer Verstärkung einer Drehschwingung entgegen, die das Getriebe erfasst und damit das störende Getrieberasseln verursacht.

Im Gegensatz zur Schlupfregelung tritt bei der Erfindung kein Dauerschlupf an der Kupplung auf, so dass insgesamt weniger Energie in der Kupplung in Wärme umgewandelt wird. Als Folge verbessert sich der Wirkungsgrad des Triebstrangs. Anders ausgedrückt: Die zur Vermeidung des Rasselgeräusches in Kauf genommene Wirkungsgradverschlechterung wird verringert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: eine steuerbare Reibungskupplung zwischen einem Verbrennungsmotor und einem Wechselgetriebe;
- Fig. 2: ein Flussdiagramm als Ausführungsbeispiel eines erfindungsgemäßen Verfahrens;
- Fig. 3: zeitliche Verläufe verschiedener Drehmomente;
- Fig. 4: eine Ausgestaltung des Verfahrens mit einer Adaption zur Berücksichtigung des tatsächlich übertragenen Drehmoments;
- Fig. 5: eine Kennlinie, die einen bei der Adaption verwendeten Zusammenhang zwischen Messgrößen und dem Schlupf angibt; und
- Fig. 6: eine mögliche Zuordnung von Korrekturwerten K zu Werten einer Drehzahl als relevantem Betriebsparameter.

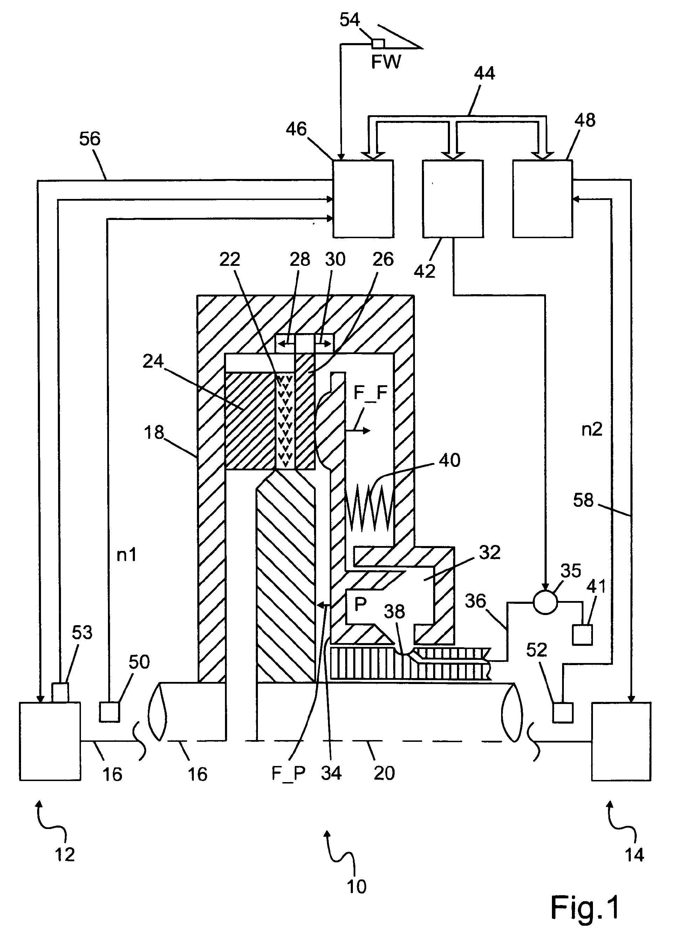

Im Einzelnen zeigt die Figur 1 eine steuerbare Reibungskupplung 10 zwischen einem Verbrennungsmotor 12 und einem Wechselgetriebe 14. Die Reibungskupplung 10 weist ein drehfest mit einer Kurbelwelle 16 des Verbrennungsmotors 12 gekoppeltes Teil 18 und eine drehfest mit einer Antriebswelle 20 des Wechselgetriebes 14 verbundene Mitnehmerscheibe 22 auf. Die Mitnehmerscheibe 22 läuft zwischen zwei Druckplatten 24 und 26 des Teils 18. Die Druckplatte 26 ist in Richtung der Pfeile 28, 30 durch eine Keilverzahnung axial beweglich im Teil 18 geführt und wird von einer Druckkraft F_P gegen eine Federkraft F_F gegen die Mitnehmerscheibe 22 gedrückt. Die Mitnehmerscheibe 22 ist ebenfalls axial beweglich, was z. B. durch eine Keilverzahnung zwischen der Mitnehmerscheibe 22 und der Getriebewelle 20 realisiert sein kann.

Die Druckkraft F_P wird in der Ausgestaltung der Figur 1 durch einen Öldruck P in einem Druckraum 32 erzeugt, der von einem drehfest mit dem Teil 18 verbundenen Übertrager 34 axial beweglich abgedichtet wird. Der Druck P wird von einem Druckstellglied 35 erzeugt und über eine Druckleitung 36 und eine Steuernut 38 in den Druckraum 32 übertragen. Die Federkraft F_F wird in der Ausgestaltung der Figur 1 durch eine Zugfeder 40 erzeugt, die eine axial gerichtete Zugkraft zwischen dem Übertrager 34 und dem Teil 18 erzeugt. Ausgestaltungen mit einer oder mehreren Druckfedern sind ebenfalls möglich und üblich.

Bei geringem Öldruck P überwiegt die Federkraft F_F und entlastet die Mitnehmerscheibe 22, so dass die Reibungskupplung 10 öffnet, d. h. weniger Drehmoment überträgt. Eine Erhöhung des Öldrucks P bewirkt dagegen eine Vergrößerung der zwischen der Mitnehmerscheibe 22 und den Druckplatten 24, 26 wirkenden Druck- und ReibungsKräfte und führt daher zu einem Schließen der Kupplung 10, also zu einer Erhöhung des maximal übertragbaren Kupplungsmomentes.

Das Druckstellglied 35 ist z. B. eine steuerbare Ölpumpe und/oder ein Drucksteuerventil, das die Druckleitung 36 mit einem Druckreservoir 41 verbindet. Das Druckstellglied 35 wird in der Ausgestaltung der Figur 1 von einem Kupplungssteuergerät 42 gesteuert, das über einen Datenbus 44 mit einem Motorsteuergerät 46 und einem Getriebesteuergerät 48 kommuniziert. Dabei versteht es sich, dass die Funktionen der Steuergeräte 42, 46 und 48 auch durch ein einzelnes Steuergerät oder durch zwei einzelne Steuergeräte koordiniert ausgeführt werden können. Die drei Blöcke 42, 46, 48 können z. B. bei einer Zusammenfassung zu einem Steuergerät zusammen mit dem Bus 44 als zusammenwirkende Funktionsblöcke verstanden werden.

In jedem Fall ist das Steuergerät 42 oder der seine Funktion repräsentierende Block 42 dazu eingerichtet, insbesondere dazu programmiert, den Ablauf eines der hier vorgestellten Verfahren oder einer der Ausgestaltungen der Verfahren zu steuern.

In jedem Fall stehen Signale, die einem der Blöcke 42, 46 und 48 zugeführt werden, und Informationen über Stellgrößen, die von einem der Blöcke 42, 46 und 48 ausgegeben werden, auch den jeweils anderen der Blöcke 42, 46 und 48 zur Verfügung. In der Ausgestaltung der Figur 1 werden den Blöcken 42, 46 und 48 insbesondere ein Signal n1 eines Drehzahlsensors 50 auf der Verbrennungsmotorseite der Reibungskupplung 10 und ein Signal n2 eines Drehzahlsensors 52 auf der Wechselgetriebeseite der Reibungskupplung 10 sowie ein Signal FW eines Fahrerwunschgebers 54 zugeführt. Aus den Signalen der beiden Drehzahlsensoren 50 und 52 lässt sich damit insbesondere eine Drehzahldifferenz zwischen dem Teil 18 und der Getriebewelle 20 bei nicht vollständig geschlossener Reibungskupplung 10 bestimmen.

Aus diesen Signalen und ggf. weiteren Signalen weiterer Sensoren 53 formen die Steuergeräte/Blöcke 42, 46 und 48 Stellsignale zur Steuerung des Verbrennungsmotors 12, der Reibungskupplung 10 und des Wechselgetriebes 14. Im Fall des Verbrennungsmotors 12 wird insbesondere die Füllung von Brennräumen mit Luft, die dazu passende Kraftstoffdosierung und der Zeitpunkt des Verbrennungsbeginns gesteuert, damit der Verbrennungsmotor 12 das vom Fahrer oder einer Funktion einer Fahrdynamikregelung oder einer anderen Funktion geforderte Drehmoment als Kupplungsmoment an der Reibungskupplung 10 bereitstellt.

Der vom Steuergerät 46 zum Verbrennungsmotor 12 weisende Pfeil 56 repräsentiert solche Stelleingriffe. Der vom Getriebesteuergerät 48 zum Wechselgetriebe 14 weisende Pfeil 58 repräsentiert entsprechend Stelleingriffe in das Wechselgetriebe. Es versteht sich, dass die hydraulisch steuerbare Reibungskupplung 10 nach der Fig. 1 lediglich eine Ausgestaltung steuerbarer Reibungskupplungen darstellt. Steuerbare Reibungskupplungen lassen sich zum Beispiel als Einscheiben- oder Mehrscheiben-Trockenkupplungen oder als in einem Ölbad laufende Lamellenkupplungen realisieren. Ferner lassen sich nach der Art der Betätigung hydraulisch, pneumatisch oder elektromagnetisch betätigte steuerbare Kupplungen unterscheiden. Die Erfindung ist in Verbindung mit sämtlichen Ausgestaltungen steuerbarer Reibungskupplungen verwendbar.

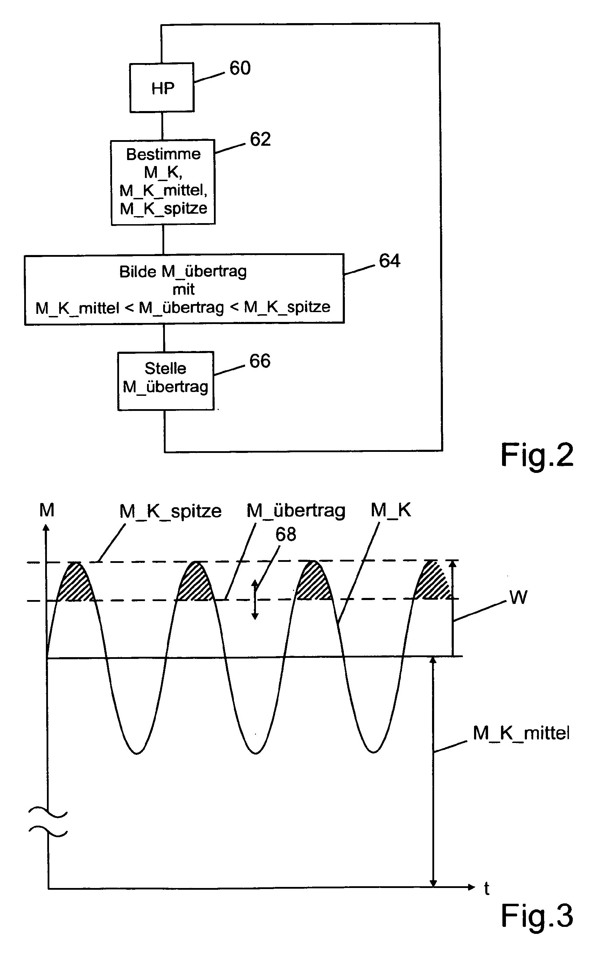

Figur 2 zeigt ein Ausführungsbeispiel eines erfindungsgemäßen Verfahrens, wie es durch die Blöcke 42, 44 und 46 der Figur 1 gesteuert wird. Dabei entspricht der Schritt 60 einem übergeordneten Programm zur Steuerung des Verbrennungsmotors 12, das im Block 46 abgearbeitet wird. Der Block 46 bestimmt insbesondere einen Wert des Kupplungsmomentes M_K, das vom Verbrennungsmotor 12 zur Übergabe an die Reibungskupplung 10 bereitgestellt wird. Dieses Kupplungsmoment M_K hängt vor allem von der Füllung von Brennräumen des Verbrennungsmotors 12, dem Wirkungsgrad der Verbrennung dieser Füllungen und dem Drehmomentbedarf von Nebenaggregaten ab.

Die dafür relevanten Betriebsparameter des Verbrennungsmotors 12 wie Ansaugluftmasse, Drehzahl, Zündwinkel, Kraftstoff/Luft-Verhältnis usw. liegen in modernen Steuergeräten vor. Moderne Steuergeräte berechnen darüber hinaus aus den genannten Werten bereits ein Kupplungsmoment M_K, so dass die Erfindung insofern keine weiteren Anforderungen an den Block 46 stellt.

Der Schritt 62 in der Figur 2 repräsentiert diese an sich bekannte Berechnung des Kupplungsmomentes M_K aus Betriebsparametern des Verbrennungsmotors 12. Sofern der Block 46 einen Momentanwert des Kupplungsmomentes M_K bildet, erfolgt im Schritt 62 ferner eine Mittelung des Momentanwertes zu einem mittleren Wert des Kupplungsmomentes M_K_mittel.

Ferner wird im Block 62 ein Maß für den Wechselanteil W (vergleiche Fig. 3) des Kupplungsmomentes M_K gebildet. Der Wechselanteil ergibt sich als Folge der diskontinuierlichen Arbeitsweise des Verbrennungsmotors 12 sowie der Schwingungseigenschaften der Kraftübertragung im Verbrennungsmotor 12 (Torsionsschwingungen der Kurbelwelle 16) und der Schwingungseigenschaften der übrigen Kraftübertragung einschließlich der Bauteile der Reibungskupplung 10, des Wechselgetriebes 14 und der übrigen Kraftübertragung zu den Antriebsrädern eines Kraftfahrzeugs.

Als Maß für den Wechselanteil W kommt zum Beispiel die Differenz des Spitzenwertes M_K_spitze des Kupplungsmomentes M_K und des Gleichanteils oder Mittelwerts M_K_mittel in Frage. Werte für den Wechselanteil W können z.B im Block 46 in Kennfeldern abgespeichert sein, die in Abhängigkeit von Betriebsparametern des Verbrennungsmotors 12 wie der Last und/oder der Drehzahl adressiert werden. Der Spitzenwert M_K_spitze ergibt sich in diesem Fall als Summe des aus einem Kennfeld ausgelesenen Wertes und des laufend aus Betriebsparametern des Verbrennungsmotors 12 gebildeten mittleren Wertes des Kupplungsmomentes M_K_mittel.

Mit den durch den Schritt 62 erworbenen Werten für M_K_mittel und M_K_spitze wird im Schritt 64 ein Wert M_übertrag gebildet, der einen Soll-Wert für das von der Reibungskupplung 10 maximal übertragbare Drehmoment repräsentiert. Dabei wird M_übertrag so gebildet, dass M_übertrag größer als der Wert M_K_mittel des mittleren Kupplungsmoments und kleiner als der Spitzenwert M_k_spitze des Kupplungsmomentes M_K des Verbrennungsmotors 12 ist. M_übertrag wird in einer Ausgestaltung als Funktion eines Korrekturwerts K gebildet.

Der Wert M_übertrag stellt einen Sollwert für das von der Reibungskupplung 10 maximal übertragbare Kupplungsmoment dar und wird durch Verknüpfen eines ersten Wertes K1 des Korrekturwerts K mit dem mittleren Kupplungsmoment M_K_mittel gebildet. Die Verknüpfung erfolgt bevorzugt additiv oder multiplikativ. Die Darstellung der Fig. 3 ergibt sich bei einer additiven Verknüpfung.

Die Bildung von M_übertrag erfolgt bevorzugt durch den Block 42 aus der Fig. 1. An den Schritt 64 schließt sich ein Schritt 66 an, in dem die Reibungskupplung 10 so angesteuert wird, dass sie nur Drehmomente überträgt, die kleiner als der Soll-Wert M_übertrag sind. Mit anderen Worten: Die Stellgröße zur Steuerung der Reibungskupplung 10 wird in Abhängigkeit von dem Sollwert gebildet. Dieses Stellen des zu übertragenden Drehmomentes M_übertrag erfolgt durch Ansteuerung des Stellgliedes 66 durch das Kupplungssteuergerät 42, beziehungsweise den Block 42.

Figur 3 veranschaulicht die technische Wirkung dieses Verfahrens. Im Einzelnen zeigt die Figur 3 den zeitlichen Verlauf des Kupplungsmomentes M_K, das einen mittleren Wert oder Gleichanteil M_K_mittel sowie einen Wechselanteil mit einer Amplitude W aufweist. Die Spitzenwerte M_K_spitze ergeben sich als Summe aus dem Gleichanteil M_K_mittel und der Amplitude W des Wechselanteils. Ferner zeigt die Figur 3 den Wert des zwischen dem mittleren Wert M_K_mittel und dem Spitzenwert M_K_spitze liegenden Drehmomentes M_übertrag als obere Grenze des von der Reibungskupplung 10 zu übertragenden Drehmoments. Wie durch den Pfeil 68 angedeutet wird, kann der Wert von M_übertrag entweder näher an dem Spitzenwert M_K_spitze oder näher an dem Mittelwert M_K_mittel liegen.

Dadurch dass er in jedem Fall zwischen den beiden Werten M_K_mittel und M_K_spitze liegt, wird die Reibungskupplung 10 beim Auftreten der schraffierten Drehmomentspitzen kurzzeitig durchrutschen. Im Gegensatz zu der eingangs genannten Regelung eines Schlupfes bei Wandlerüberbrückungskupplungen wird bei der Erfindung also kein definierter Dauerschlupf eingestellt. Die Kupplung rutscht nur kurz durch, wenn das an der Reibungskupplung 10 wirkende Drehmoment über das eingestellte, übertragbare Kupplungsmoment M_übertrag ansteigt.

Bei diesem Rutsch- oder Schlupfvorgang wirken sich zwei Effekte günstig aus: Der Schwingungen anregende Wechselanteil wird reduziert und außerdem wird das gesamte schwingende System aus Verbrennungsmotor 12 und übrigem Triebstrang in der kurzen Schlupfphase in zwei Schwingungssysteme, nämlich den Verbrennungsmotor 12 und den übrigen Triebstrang mit dem Wechselgetriebe 14 aufgeteilt. Dadurch ändern sich auch die anregbaren Eigenfrequenzen. Im Allgemeinen wird die aktuelle Motordrehzahl n1, die beim Auftreten eines Spitzenwertes M_K_spitze unter Umständen mit einer Resonanz des gesamten Schwingungssystems korreliert, nicht mehr mit den Eigenfrequenzen der zwei einzelnen Schwingungssysteme korrelieren. Dadurch werden die Drehschwingungsamplituden am Eingang des Wechselgetriebes 14 und damit auch die störenden Rasselgeräusche deutlich reduziert.

Durch Verschleiß und/oder Temperatureffekte wird sich die Korrelation zwischen der Stellgröße zur Beeinflussung des übertragbaren Drehmoments und dem tatsächlich übertragbaren Drehmoment im Betrieb der Reibungskupplung verändern. Um die Reibungskupplung dennoch so ansteuern zu können, dass die Drehmomentspitzen abgeschnitten werden, ohne dabei einen unerwünscht großen oder kleinen Schlupf zu verursachen, wird in einer bevorzugten Ausgestaltung ein Maß für das tatsächlich übertragene Drehmoment aus Betriebsparametern des Antriebsstrangs gebildet und der Sollwert und/oder die Stellgröße ergänzend in Abhängigkeit von dem Maß gebildet.

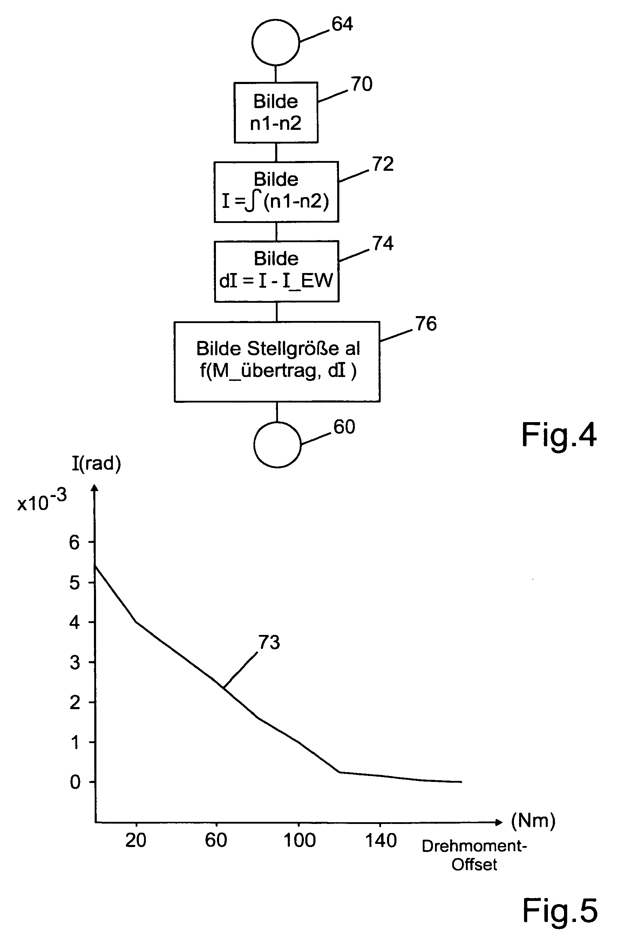

Fig. 4 zeigt eine solche Ausgestaltung in Form eines Flussdiagramms, das den Schritt 66 in der Fig. 2 ersetzt. Dadurch kann die Vorgabe des Sollwerts M_übertrag und/oder die Vorgabe der Stellgröße in einem geschlossenen Regelkreis an die genannten Veränderungen adaptiert werden. Als Betriebsparameter werden bevorzugt die Drehzahl n1 auf der Primärseite (Verbrennungsmotorseite) der Reibungskupplung 10 und die Drehzahl n2 auf der Sekundärseite (Wechselgetriebeseite) der Reibungskupplung 10 als Betriebsparameter verwendet.

Zur Bildung eines Maßes für das tatsächlich von der Reibungskupplung 10 übertragene Drehmoment wird im Schritt 70 zunächst die Differenz der Drehzahlen n1 und n2 gebildet. Da diese Drehzahlen räumlich getrennt voneinander erfasst werden tritt zwischen ihnen gerade im Resonanzfall eine Torsionsschwingung auf, die der eigentlichen Drehzahldifferenz zwischen Mitnehmerscheibe 22 und Druckplatten 24, 26 überlagert ist. Der Momentanwert der Drehzahldifferenz bildet daher die Drehzahldifferenz zwischen Mitnehmerscheibe 22 und Druckplatten 24, 26 gerade in dem Resonanzfall nicht unverfälscht ab.

Ein Rutschen der Kupplung ist aber an einer Verschiebung des Mittelwerts der Differenz zu erkennen. Wird n2 von n1 subtrahiert und wird n2 wegen rutschender Kupplung kleiner, verschiebt sich der Mittelwert der Differenz zu größeren Werten. Um diese Verschiebung zu erfassen erfolgt in dem Schritt 72 die Bildung eines Integrals I der Differenz der beiden Drehzahlen n1, n2 über ein vorgegebenes Integrationszeitintervall oder Integrationswinkelintervall.

Der Wert des Integrals ist ohne Schlupf zwischen der Mitnehmerscheibe 22 und den Druckplatten 24, 26 minimal und wächst mit steigendem Schlupf an. Ein minimaler Schlupf entspricht einer vollständigen Übertragung des vom Verbrennungsmotor 12 bereit gestellten Kupplungsmoments. Vom minimalem Wert abweichende Werte des Integrals lassen sich bei einem bekannten Triebstrang eindeutig auf das übertragbare Drehmoment abbilden.

Fig. 5 zeigt eine solche Abbildung in Form einer Kennlinie 73, bei der Werte des Integrals I mit der Winkeleinheit rad über einem additiven Zusatz oder Drehmoment-Offset zum mittleren Kupplungsmoment M_K_mittel aufgetragen sind. Wie man sieht, steigt das Integral der Differenz erwartungsgemäß mit kleiner werdendem Offset an.

Dieses Verhalten erlaubt eine Adaption der Korrelation zwischen Sollwertvorgabe und Stellgrößenvorgabe bei der Ansteuerung der Reibungskupplung 10: Dazu wird in einem Schritt 74 in der Fig. 4 der gebildete Wert des Integrals 1 mit einem Erwartungswert I_EW für das Integral I verglichen, indem eine Differenz dl = I-I_EW gebildet wird. Im Anschluss daran wird im Schritt 76 die Stellgröße abhängig von M_übertrag und dl so gebildet, dass die Reibungskupplung 10 mehr Drehmoment überträgt, wenn das Integral I größer als der Erwartungswert I_EW ist und weniger Drehmoment überträgt, wenn das Integral I kleiner als der Erwartungswert I_EW ist.

Will man bei den Verhältnissen der Fig. 5 zum Beispiel einen additiven Drehmoment-Offset von 20 Nm einstellen, erwartet man nach dem Verlauf der Kennlinie 73 einen bestimmten Wert des Integrals I, der im Fall der Fig. 5 etwas kleiner als 0,004 rad ist. Ist der Wert des tatsächlich gebildeten Integrals I dann kleiner als dieser durch die Kennlinie 73 vorgegebene Erwartungswert, bedeutet dies, dass die verwendete Stellgröße noch zu wenig Schlupf erzeugt. Entsprechend wird die im Steuergerät 42 verwendete Korrelation zwischen Korrekturwert und Stellgröße so verändert, dass sich der Schlupf erhöht.

Ist der Wert des tatsächlich gebildeten Integrals 1 dagegen größer als der durch die Kennlinie 73 vorgegebene Erwartungswert, erzeugt die verwendete Stellgröße zu viel Schlupf. Entsprechend wird die im Steuergerät 42 verwendete Korrelation zwischen Korrekturwert und Stellgröße so verändert, dass sich der Schlupf verringert. Im Gegensatz zu der eingangs genannten Schlupfregelung ist für diese Adaption keine aufwändige, hochauflösende Winkelsensorik und Signalverarbeitung erforderlich. Die Drehzahlen n1 und n2 lassen sich mit vergleichsweise einfachen Drehzahlsensoren erfassen und die Signalverarbeitung ist durch die Integralbildung ebenfalls nicht mit einem besonderen Aufwand verbunden.

Das in der Fig. 3 veranschaulichte Abschneiden der Drehmomentspitzen ist mit Blick auf die angestrebte Vermeidung/Verringerung von Rasselgeräuschen nicht im ganzen Drehzahlspektrum erforderlich. Die Rasselgeräusche treten als Folge von Resonanzeffekten nur in bestimmten Drehzahl- und oder Last/Drehzahl-Bereichen auf. Da das Abschneiden der Drehmomentspitzen unter Last erfolgt, verringert es prinzipiell die Lebensdauer der Kupplung. Außerdem verringert es, wenn auch nur geringfügig, den Wirkungsgrad der Kraftübertragung.

Bei einer bevorzugten Ausgestaltung erfolgt das Abschneiden der Drehmomentspitzen daher nur in einem vorbestimmten, Resonanzen aufweisenden Bereich eines oder mehrerer Betriebsparameter des Verbrennungsmotors. Außerhalb dieses Bereichs erfolgt in einer Ausgestaltung eine Verknüpfung mit einem zweiten Korrekturwert zu einem Sollwert, bei dem auch periodisch auftretende Spitzenwerte des Kupplungsmoments übertragen werden.

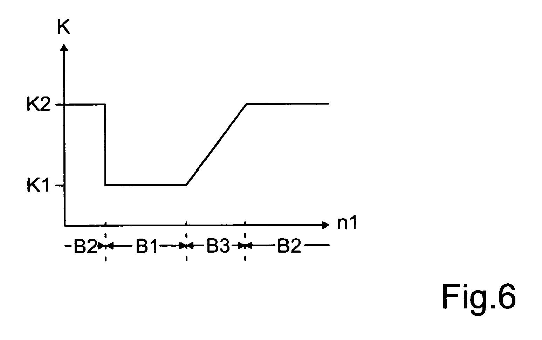

Fig. 6 zeigt eine mögliche Zuordnung von Korrekturwerten K auf der Ordinate zu Bereichen der Drehzahl n1 als relevantem Betriebsparameter auf der Abszisse. In einem erstem Bereich B1 besitzt ein erster Korrekturwert K1 einen vergleichsweise niedrigen Wert von zum Beispiel 20 Nm. Unabhängig von diesem nur als Beispiel dienenden Zahlenwert ist K1 so bemessen, dass die Reibungskupplung 10 das beschriebene diskontinuierliche Schlupfverhalten zeigt, bei dem die Drehmomentspitzen abgeschnitten werden. Der erste Bereich B1 liegt bevorzugt so, dass er eine Resonanzdrehzahl umgibt.

Außerhalb der Umgebung B1 der Resonanzdrehzahl sind zweite Bereiche B2 vorgesehen, in denen ein zweiter Korrekturwert K2 verwendet wird. Der zweite Korrekturwert K2 ist bevorzugt so bemessen, dass die Reibungskupplung 10 auch die Drehmomentspitzen mit überträgt. Außerhalb von Resonanzdrehzahlen ist dies unproblematisch, da dort kein Getrieberasseln auftritt.

Durch diese Ausgestaltung werden die Wirkungsgradeinbußen, die mit dem Kappen der periodische auftretenden Spitzenwerte verbunden sind, außerhalb des vorbestimmten Bereichs vermieden, was den Antriebswirkungsgrad insgesamt erhöht, den Verschleiß der Reibungskupplung 10 verringert und damit deren Lebensdauer erhöht. Bei einem Wert des ersten Korrekturwerts K1 von 20 Nm ist ein Wert von 70 Nm ein typischer Wert für K2. Fig. 6 zeigt darüber hinaus einen dritten Bereich B3, in dem der Korrekturwert K bei steigender Drehzahl n1 stetig von K1 auf K2 steigt. Dadurch wird ein Ruck im Antriebstrang beim Übergang zwischen den Bereichen B1 und B2 vermieden. Es versteht sich, dass ein solcher Übergangsbereich mit stetig statt sprungförmig variierendem Korrekturwert K auch auf der Niedrig-Drehzahlseite des Bereiches B1 verwendet werden kann.

## Patentansprüche

1. Verfahren zum Steuern einer Reibungskupplung (10) zwischen einem Verbrennungsmotor (12) und einem Wechselgetriebe (14), **dadurch gekennzeichnet, dass** die Reibungskupplung (10) so gesteuert wird, dass sie ein mittleres Kupplungsmoment (M_K_mittel) des Verbrennungsmotors (12) überträgt und periodisch auftretende Spitzenwerte (M_K_spitze) des Kupplungsmomentes nicht überträgt.

2. Verfahren nach Anspruch 1, **dadurch gekennzeichnet, dass** ein Maß für das mittlere Kupplungsmoment (M_K_mittel) gebildet und mit einem ersten Korrekturwert (K1) zu einem Sollwert (M_übertrag) für ein bei dem mittleren Kupplungsmoment (M_K_mittel) maximal übertragbares Kupplungsmoment verknüpft wird.

3. Verfahren nach Anspruch 2, **dadurch gekennzeichnet, dass** außerhalb eines vorbestimmten Bereichs (B1) der Drehzahl (n1) des Verbrennungsmotors (12), in dem die Verknüpfung mit dem ersten Korrekturwert (K1) erfolgt, eine Verknüpfung mit einem zweiten Korrekturwert (K2) zu einem Sollwert erfolgt, bei dem auch periodisch auftretende Spitzenwerte (M_K_spitze) des Kupplungsmoments übertragen werden.

4. Verfahren nach einem der vorhergehenden Ansprüche, **dadurch gekennzeichnet, dass** eine Stellgröße zur Steuerung der Reibungskupplung (10) in Abhängigkeit von dem Sollwert (M_übertrag) gebildet wird.

5. Verfahren nach Anspruch 4, **dadurch gekennzeichnet, dass** ein Maß (dl) für das tatsächlich übertragene Drehmoment aus Betriebsparametern (n 1, n2) des Verbrennungsmotors (12) und/oder der Reibungskupplung (10) und/oder des Wechselgetriebes (14) gebildet wird und dass der Sollwert und/oder die Stellgröße ergänzend in Abhängigkeit von dem Maß (dl) gebildet wird.

6. Verfahren nach Anspruch 5, **dadurch gekennzeichnet, dass** eine Drehzahl (n1) auf der Primärseite der Reibungskupplung (10) und eine Drehzahl (n2) auf der Sekundärseite der Reibungskupplung (10) als Betriebsparameter verwendet werden.

7. Verfahren nach Anspruch 6, **dadurch gekennzeichnet, dass** ein Integral (I) einer Differenz der beiden Drehzahlen (n1, n2) gebildet wird und dass das Maß (dl) in Abhängigkeit vom Wert des Integrals (I) gebildet wird.

8. Verfahren nach Anspruch 7, **dadurch gekennzeichnet, dass** der gebildete Wert des Integrals (I) mit einem Erwartungswert (I_EW) für das Integral (I) verglichen wird und dass die Stellgröße so verändert wird, dass die Reibungskupplung (10) mehr Drehmoment überträgt, wenn das Integral (I) größer als der Erwartungswert (I_EW) ist und weniger Drehmoment überträgt, wenn das Integral (I) kleiner als der Erwartungswert (I_EW) ist.

9. Steuergerät (44) zum Steuern einer Reibungskupplung (10) zwischen einem Verbrennungsmotor (12) und einem Wechselgetriebe (14), **dadurch gekennzeichnet, dass** das Steuergerät (44) dazu eingerichtet ist, die Reibungskopplung (10) so zu steuern, dass sie ein mittleres Kupplungsmoment (M_K_mittel) des Verbrennungsmotors (12) überträgt und periodisch auftretende Spitzenwerte (M_K_spitze) des Kupplungsmomentes nicht überträgt.

10. Steuergerät (44) nach Anspruch 9, **dadurch gekennzeichnet, dass** es dazu eingerichtet ist, den Ablauf eines der Verfahren nach den Ansprüchen 2 bis 8 zu steuern.
